# EUROPÄISCHE PATENTANMELDUNG

(11) **EP 0 754 893 A1**
(43) Veröffentlichungstag der Anmeldung: **22.01.1997**
(21) Anmeldenummer: 96105554.8
(22) Anmeldetag: 09.04.1996
(51) Int. Cl.: F16J 15/34

(54) **Gleitringdichtung für die Laufwerke von Gleiskettenfahrzeugen**

(30) Priorität: 15.07.1995 DE 19525862
(71) Anmelder: AE GOETZE GmbH, D-51399 Burscheid (DE)
(72) Erfinder: Germann, Erwin, Dipl.-Ing., 86551 Aichach (DE); Neureuter, Lothar, 86316 Friedberg (DE); Zutz, Hans-Hening, Ing., 42929 Wermelskirchen (DE); Veutgen, Hans-Jürgen, 51399 Burscheid (DE)

(57) **Zusammenfassung**

Gleitringdichtungen für die Laufwerke von Gleiskettenfahrzeugen und Baumaschinen mit Gleitringen aus Eisenwerkstoffen sind ganzflächig nitriert oder nitrocarburiert, sodaß sie bei Verwendung preiswerter und spanabhebend leicht bearbeitbarer unlegierten bis schwachlegierter handelsüblicher Eisenwerkstoffe eine hohe abrasive und korrosive Verschleißfestigkeit erhalten, die für den oben angegebenen Anwendungsfall genügt.

## Beschreibung

Die Erfindung betrifft eine Gleitringdichtung für die Laufwerke von Gleiskettenfahrzeugen und Baumaschinen mit Gleitringen aus einem Eisenwerkstoff.

Laufwerke von Gleiskettenfahrzeugen und Baumaschinen sind während ihres Betriebes hohen Verschleißbeanspruchungen durch vor allem Staub, Sand, Schlamm und Erdreich ausgesetzt. Zum Schutz vor den starken korrosiven und abrasiven Belastungen müssen vor allem die Lager der Stütz-, Lauf- und Umlenkrollen bei Gleiskettenmaschinen und die Naben und Achsen bei Räderlaufwerken mit Dichtungen abgedichtet werden. Solche Dichtungen sind bevorzugt Gleitringdichtungen, bei denen zwei metallische Gleitringe gleicher Abmessungen in Gummirundringen elastisch gelagert und von diesen axial aneinandergepreßt aufeinander laufen. Die Laufflächen der Gleitringe sind geläppt.

Entsprechend der starken abrasiven und korrosiven Belastung im Betrieb werden für die Gleitringe entsprechend verschleißbeständige Werkstoffe verwendet. Dies sind in erster Linie harte Gußwerkstoffe aus Stelliten und nickelhaltigen ledeburitisch erstarten weißen Gußeisenlegierungen. Die hohe Härte dieser Gußwerkstoffe ermöglicht aber nur die schleifende Bearbeitung der Ringe, sodaß diese zur Minimierung der aufwendigen Schleifarbeit möglichst formgenau in verteuernden komplizierten Gußverfahren gegossen werden müssen. Stellite und hochnickelhaltige Gußeisenlegierungen besitzen darüber hinaus hohe Anteile an teuren Nichteisenmetalllegierungszusätzen.

Der vorliegenden Erfindung liegt daher die Aufgabe zugrunde eine Gleitringdichtung gemäß Oberbegriff des Hauptpatentanspruches zu schaffen, deren Gleitringe aus einem einfach zu bearbeitenden metallischen Werkstoff ohne teure Legierungszusätze bestehen, die aber gleichzeitig eine hohe Beständigkeit gegenüber abrasiven und korossiven Verschleiß besitzen.

Erfindungsgemäß wird diese Aufgabe durch eine Gleitringdichtung gemäß Oberbegriff des Hauptpatentanspruches gelöst, deren Gleitringe aus Eisenwerkstoffen nitriert oder nitrocarburiert sind. Und zwar wurde gefunden, daß Gleitringe aus herkömmlichen und handelsüblichen unlegierten oder schwach legierten Gußeisenwerkstoffen, aus ungehärteten oder mikrolegierten Stählen, aus herkömmlichen schwach legierten Sintereisenwerkstoffen oder aus Chromstählen durch das erfindungsgemäß eingesetzte Nitrieren oder Nitrocarburieren so verschleißfest wurden, daß ihre Korrosionsbeständigkeit und Abrasionsfestigkeit den Werten der herkömmlichen aus Stelliten oder nickelhaltigen Gußeisenlegierungen gefertigten Gleitringen entsprach. Die aus den obigen Eisenwerkstoffen hergestellten und nitrierten beziehungsweise nitrocarburierten Gleitringe wurden in 1000 Stunden Schmutzwasserprüfstandläufen und Trockenlaufverschleißtesten mit einem positiven Ergebnis getestet. Die gemessenen Verschleißwerte entsprachen den Werten von herkömmlichen aus Stelliten oder Nickelhartlegierungen gefertigten Gleitringen.

Zum nitrieren beziehungsweise nitrocarburieren der Gleitringe sind die bekannten Nitrier- und Nitrocarburierverfahren wie das Badnitrieren, Gasnitrieren, Plasmanitrieren oder Pulsplasmanitrieren gleichermaßen gut geeignet. Das Nitrieren beziehungsweise nitrocarburieren der Ringe erfolgt dabei bevorzugt ganzflächig an den äußeren und inneren Umfangsflächen sowie den Laufflächen der Ringe.

Die verwendeten Eisenwerkstoffe bestehen bevorzugt aus den handelsüblichen Gußeisenqualitäten GG, GGV, JGG, GTS und GTW. Als Stähle können handelsübliche ungehärtete und mikrolegierte Stähle und Chromstähle verwendet werden. Die verwendeten Sintereisenmetalle sind schwach legiert. Gefunden wurde auch, daß die obigen Eisenwerkstoffe zur Verbesserung ihrer Nitrierbarkeit und Nitrocarburierbarkeit mit zusätzlich bis zu maximal 5 Gewichtsprozent Chrom und/oder maximal 3 Gewichtsprozent Aluminium legiert sein können. Ebenso können die Eisenwerkstoffe bis zu maximal 0,3 Gewichtsprozent Stickstoff enthalten.

Im Sinne der Erfindung ist es aber auch möglich die bisher für Gleitringe verwendeten legierten und hochlegierten Stellite, Hartgußwerkstoffe, Stähle und Sinterwerkstoffe zu nitrieren und zu nitrocarburieren um Gleitringe für extreme Belastungen mit besonders hoher Verschleißfestigkeit zu erhalten.

Durch die Erfindung ist es vor allem möglich Gleitringe für Laufwerkdichtungen aus einfachen Eisenwerkstoffen mit hoher Verschleißfestigkeit herzustellen. Die bevorzugt verwendeten Eisenwerkstoffe sind durch ihre geringen Anteile an Legierungsmetallen preiswert. Die Gleitringe sind in einfachen Gußverfahren herstellbar und wirtschaftlich mit einfachen Verfahren spanabhebend auf ihre Endform zu bringen. Der kostenmäßige Mehraufwand des Nitrierens und Nitrocarburierens wird dabei mehr als eliminiert und die Gleitringe sind insgesamt wesentlich preiswerter herzustellen.

## Patentansprüche

1. Gleitringdichtung für die Laufwerke von Gleiskettenfahrzeugen und Baumaschinen mit Gleitringen aus Eisenwerkstoffen, dadurch gekennzeichnet, daß die Gleitringe nach einem der bekannten Verfahren nitriert oder nitrocarburiert sind.

2. Gleiringdichtung nach Anspruch 1, dadurch gekennzeichnet, daß die Gleitringe aus unlegierten bis schwach legierten Gußeisenlegierungen der Qualitäten GG, GGV, GGG, GTS oder GTW bestehen.

3. Gleitringdichtung nach Anspruch 1, dadurch gekennzeichnet, daß die Gleitringe aus ungehärteten Stählen, aus mikroliegierten Stählen oder Chromstählen bestehen.

4. Gleitringdichtung nach Anspruch 1, dadurch gekennzeichnet, daß die Gleitringe aus unlegierten bis schwach legierten Sintereisenwerkstoffen bestehen.

5. Gleitringdichtung nach den Ansprüchen 1 bis 4, dadurch gekennzeichnet, daß die Eisenwerstoffe zusätzlich bis zu 5 Gewichtsprozent Chrom, bis zu 0,3 Gewichtsprozent Stickstoff und/oder bis zu 3 Gewichtsprozent Aluminium enthalten.

6. Gleitringdichtung nach Anspruch 1, dadurch gekennzeichnet, daß die Gleitringe aus legierten bis hochlegierten Stelliten, harten Gußeisenwerkstoffen, Stählen oder Sinterwerkstoffen bestehen.
